# EUROPEAN PATENT APPLICATION

(11) **EP 2 036 765 A2**
(43) Date of publication of application: **18.03.2009**
(21) Application number: 08104563.5
(22) Date of filing: 27.06.2008
(51) Int. Cl.: B60N 2/015

(54) **A retaining arrangement**

(30) Priority: 10.10.2007 GB 0719788; 29.06.2007 GB 0712705
(71) Applicant: NMI Safety Systems Ltd., London N17 0YX (GB)
(72) Inventor: Sawdy, Michael Barry, Hertford, Hertfordshire SH13 8DU (GB)
(74) Representative: Beattie, Alex Thomas Stewart

(57) **Abstract**

A retaining arrangement for securing an object to a surface, comprising a retaining element which is moveable between a stowed position, in which the retaining element is substantially level with, or below, the level of the surface, and a retaining position, in which the retaining element protrudes from the surface and presents at least one elongate retaining slot above the surface which is substantially parallel with the surface, into which a part of an object to be retained may be inserted, the retaining slot being at least partially formed by a retaining surface of the retaining element, the retaining surface facing, when the retaining element is in the retaining position, in a direction having at least a component that extends towards the plane of the surface in the vicinity of the retaining element.

## Description

This invention relates to a retaining arrangement, and in particular concerns an arrangement for removably securing an object, such as a seat, to a surface, such as a floor.

It is known in several technical fields to provide seats which can be removably secured to a floor surface. For instance, on coaches or buses, an individual seat or a row of adjacent seats may be secured by legs to a carriage which is then slideably mounted upon a length of track secured to the floor of the vehicle. In this way, a number of seats or rows of seats may be installed along the length of the vehicle such that the spaces between successive seats or rows of seats may be adjusted, to allow variable leg room for passengers.

Alternatively, seats may be removeably attachable to the floor of a bus or mini-bus to another vehicle to be converted between a "passenger" mode, in which seats are provided, and a "cargo" mode, in which the seats are removed and the bus or minibus can be used to transport cargo.

Yet a further example arises when a bus or coach is adapted to accommodate a wheelchair user. It has been proposed to provide at least one row of seating which, in one configuration, is a normal row of seating for able-bodied passengers. In a further configuration, however, the seats in the row are moved to accommodate a wheelchair user, and for example one seat may be rotated through 90° and moved towards the side-wall of the bus or coach, with another seat being moved rearwardly and having the squab removed, so that the wheelchair can be abutted against the back of the seat during a journey.

The present invention seeks to provide an improved arrangement for releasably attaching an object, such as a seat, to a surface, such as a floor.

Accordingly, one aspect of the present invention provides a retaining arrangement for securing an object to a surface, comprising a retaining element which is moveable between a stowed position, in which the retaining element is substantially level with, or below, the level of the surface, and a retaining position, in which the retaining element protrudes from the surface and presents at least one elongate retaining slot above the surface which is substantially parallel with the surface, into which a part of an object to be retained may be inserted, the retaining slot being at least partially formed by a retaining surface of the retaining element, the retaining surface facing, when the retaining element is in the retaining position, in a direction having at least a component that extends towards the plane of the surface in the vicinity of the retaining element.

Advantageously, the retaining surface comprises an upper surface of the retaining slot, and the retaining slot further comprises a lower surface which at least partially opposes the upper surface.

Preferably, the lower surface comprises the surface to which the object is to be secured, or another component which is substantially coplanar therewith.

Conveniently, the lower surface comprises a part of the retaining element.

Advantageously, the retaining element presents, when it is in the retaining position thereof, a pair of retaining slots provided on opposite surfaces thereof.

Preferably, a first part of the retaining element, which protrudes a first distance from the surface in the retaining position, has a first width, and a second portion, which protrudes a second distance from the surface in the retaining position, has a second width, with the first width being greater than the second width and the retaining surface extending between the first part and the second part.

Conveniently, the retaining arrangement further comprises a bracing plate which surrounds at least a part of the retaining element, a top surface of the retaining element being substantially level with the bracing plate when the retaining element is in the stowed position.

Advantageously, the retaining element is biased into the retaining position, and can be held in the stowed position by an engagement arrangement.

Preferably, a switch is provided to release the engagement arrangement and allow the retaining element to move into the retaining position.

Conveniently, the retaining element is in the retaining position, the retaining element may be pushed into the stowed position, thus causing the engagement arrangement to hold the retaining element in the stowed position.

Advantageously, when the retaining element is in the retaining position, the retaining element may not be moved further from the surface.

Preferably, the retaining arrangement may be provided in an aperture in the surface, and in the stowed position the retaining arrangement substantially fills the aperture so that a generally planar surface is presented which is substantially level with the surface.

Conveniently, a part of the retaining element may be moved from an unlocked position to a locked position, to engage an object which is received in the retaining slot.

Advantageously, a pair of retaining surfaces are provided on opposite sides of the retaining element, and the sides of the retaining element may be driven apart from one another to move into the locked position.

Preferably, the retaining element may move between the stowed configuration and the retaining configuration whilst remaining substantially in the same rotational orientation.

Conveniently, the retaining arrangement may rotate between the stowed configuration and the retaining configuration.

Advantageously, a cover is provided to cover the retaining element when the retaining element is in the stowed configuration.

Preferably, the cover may be received within the aperture in the surface when the retaining arrangement is in the retaining configuration thereof.

Conveniently, the cover is pivotable, and may be oriented substantially parallel with the surface to cover the retaining element.

Advantageously, the cover may be pivoted to an orientation in which it is substantially perpendicular with the surface when the retaining element is in the retaining configuration thereof.

Another aspect of the present invention provides a carriage for mounting an object on a surface, the carriage comprising a base plate that may rest on the surface, the base plate having a receiving aperture formed therein and having a holding element located at or near an edge of the receiving aperture, the holding element being moveable with respect to the base plate so that, when a retaining element is received in the receiving aperture, the retaining element having at least one retaining surface which faces in a direction having at least a component that extends towards the plane of the surface in the vicinity of the retaining member, the holding element may move so as to abut the retaining surface, thus holding the base plate in position with respect to the retaining element.

Preferably, the receiving aperture comprises a slot having an open end at one edge of the base plate.

Conveniently, the holding element has a holding surface which is inclined with respect to the surface, and which may be advanced towards the receiving slot.

Alternatively, the holding component may be moved in a direction substantially away from the surface.

Preferably, the carriage is adapted to have a seat mounted thereon.

A further aspect of the present invention provides a method of attaching an object to a surface, comprising the steps of: providing a retaining arrangement according to any the above in the surface; mounting the object to a carriage according to the above; arranging the carriage so that the retaining element is received in the receiving slot thereof; and moving the holding element to fix the carriage in place with respect to the retaining element.

Another aspect of the present invention provides a method of attaching an object to a surface, comprising the steps of: providing a retaining arrangement according to the above in the surface; mounting the object to a carriage according to the above; arranging the carriage so that the retaining element is received in the receiving slot thereof; and moving the part of the retaining element to fix the carriage in place with respect to the retaining element.

A further aspect of the present invention provides a vehicle having one or more retaining elements according to the above provided in a floor surface thereof for attaching seats removably to the vehicle floor.

Conveniently, a plurality of retaining elements are provided for a single seat, to allow the seat to be moved to any one of a variety of positions within the vehicle.

In order that the present invention may be more readily understood, embodiments thereof will now be described, by way of example, with reference to the accompanying drawings, in which:
FIGURES 1 and 2 show a fixing arrangement embodying the present invention in two different configurations;
FIGURES 3 and 4 show parts of the retaining arrangement of Figures 1 and 2;
FIGURE 5 shows a clamping arrangement for use with the present invention;
FIGURES 6 and 7 show the connection of the clamping arrangement of Figure 5 to the retaining arrangement of Figures 1 and 2; and
FIGURE 8 shows a floor plan of a bus or coach on which arrangements of Figures 1 and 2 are used; and
FIGURES 9, 11, 13 and 15 show an alternative retaining arrangement embodying the present invention;
FIGURE 10 shows a retaining element of the alternative retaining arrangement;
FIGURE 12 shows a cover for use with the alternative retaining arrangement; and
FIGURE 14 shows a locking element for use with the alternative retaining arrangement.

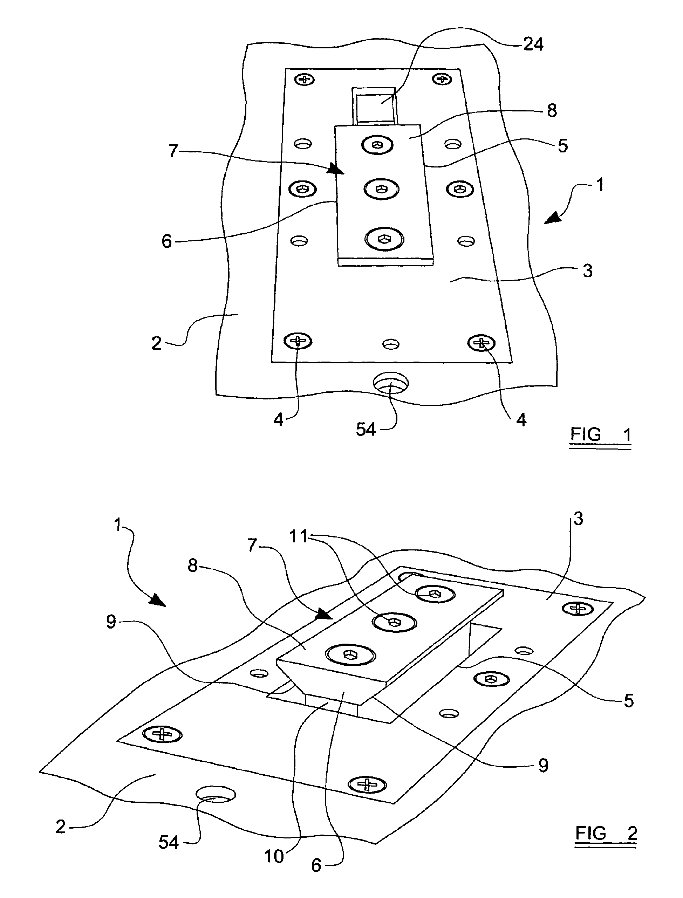

With reference firstly to Figure 1, a retaining arrangement 1 embodying the present invention is shown. The retaining arrangement 1 is adapted to allow an object to be releasably secured to a surface 2, which may be a floor surface. The retaining arrangement 1 comprises a bracing plate 3, which is formed from a robust material such as steel, and is adapted to lie substantially flush with the surface 2. In the embodiment shown in Figure 1, a hole of generally the same size as the bracing plate 3 has been cut out of the surface, with the bracing plate 3 being fitted into the hole in a tight fit so as to leave no gaps around the edges of the bracing plate 3. In the example shown, attachment surfaces are provided within the hole, running along two opposing edges thereof and set at a depth below the surface 2 which is substantially equal to the thickness of the bracing plate 3. The bracing plate 3 therefore rests on these supports (not shown), and is attached to the supports by means of a number of screws 4. Of course, any suitable method of attachment can be used to fix the bracing plate 3 in place.

A substantially rectangular aperture 5 is provided near the centre of the bracing plate 3. A retaining element 6 is located in the aperture 5, as can also be seen in Figure 2.

A top surface 7 of the retaining element 6 is substantially planar, and is of generally the same size and shape as the aperture 5 in the bracing plate 3. The top surface 7 is therefore generally rectangular.

As can be seen in Figure 2, the top surface 7 forms one surface of a top member 8, which is elongate and has a generally trapezoid cross-section. A bottom surface (not shown) of the top member 8, which is generally opposite to and parallel with the top surface 7, is narrower than the top surface 7, with inclined retaining surfaces 9 extending from the opposing longer edges of the top surface 7 to the corresponding opposing edges of the bottom surface. These engagement surfaces 9 are disposed at approximately 45° to the plane of the top surface 7.

The retaining member 6 also has a main body 10, which is generally oblong in shape, one face thereof being approximately the same size and shape as the bottom surface of the top member 7. This face (not shown) is connected to the top member 7 so that it abuts the bottom face thereof, and these two components are fixed securely together, for instance by a number of screws 11 which pass through the top surface 8 of the top member 7 and into the main body 10.

Thus, in general the cross-sectional shape of the retaining element is of generally constant thickness over the weight of the main body 10, and becomes steadily wider over the height of the top member 8. The cross-section of the main body 10 is therefore generally Y-shaped.

Figure 1 shows the retaining member 6 in a first, stowed configuration thereof, in which the top surface 7 lies substantially flush with the bracing plate 3. In this configuration, the surface 2, the bracing plate 3 and the top surface 7 of the retaining element 6 present a substantially planar surface without any features which project a significant distance above this plane. It will be understood that only the top surface 7 of the top member 8 will be visible, with the remainder of the retaining element 6 being hidden from view below the surface 7.

In a second, retaining configuration, the retaining member 6 is raised upwardly with respect to the plane of the bracing plate 3, so that the top surface 7 of the top member 8 lies above the bracing plate 3. At least a part of each of the retaining surfaces 9 is also disposed above the plane of the bracing plate 3. It is important, however, that there is a limit to the upward movement of the retaining element 6, and that, once the retaining element 6 is in the retaining configuration thereof, further upward movement of the retaining element 6 with respect to the bracing plate 3 is strongly resisted.

It will be appreciated that the movement of the retaining element 6 between the stowed and retaining configuration may be achieved in several different ways. However, one specific method of achieving this is described below.

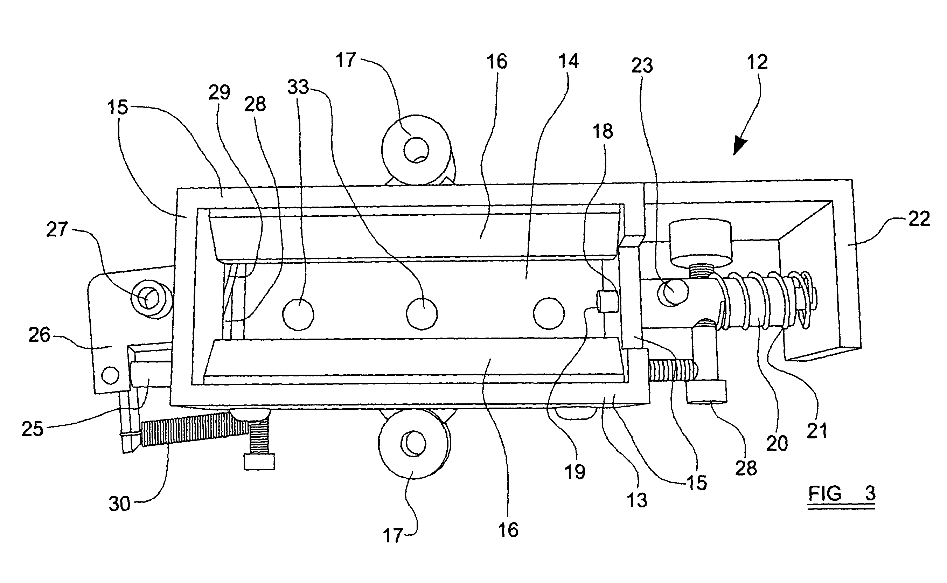

Turning to Figure 3, a holding arrangement 12 for holding the retaining element 6 (which is absent from Figure 3) is shown. The holding arrangement 12 comprises a box-shaped main portion 13, which generally takes the form of a hollow rectangular structure with a base 14 and four upstanding side-walls 15 which protrude upwardly from the edges of the base 14. The box-shape main part 13 has an open top. Shaping portions 16 are inserted into the interior of the main body 13 so that they lie along inner edges of the opposing longer walls 15. Each of the shaping portions 16 generally narrows in the interior of the main portion near the base 14 thereof, and has an inclined upper surface that slopes towards the top edge of the side-wall 15 against which it is placed. It will therefore be understood that, in cross-section, the interior space within the main portion 13 is substantially Y-shaped.

A pair of fixing elements 17 are attached to outer surfaces of the longer side-walls 15. Each of these fixing attachments has a generally cylindrical body with a longitudinal bore formed therethrough, which may receive a nut, screw or similar fixing element to allow the holder 12 be fixed in place with respect to surrounding components.

A substantially circular aperture 18 is provided in one of the shorter side-walls 15 of the main portion 13, with a slideable rod 19 being received in the aperture 18. The rod 19 protrudes from one end with a cylindrical body 20, which is disposed outside the wall 15 but is biased towards the wall by a spring 21 which presses against one surface of a substantially L-shaped bracing element 22. The bracing element 22 is attached to the main portion 13, and which extends directly away therefrom before bending through 90° to present a surface which is opposed to the wall 15 having the aperture 18 therethrough. If the cylindrical body 20 is forced away from the main part 13, the rod 19 is withdrawn from the interior of the main portion 13. However, if no additional external forces act on the cylindrical body 20, the spring 21 pushes the cylindrical body 20 towards the main part 13, so that part of the rod 19 protrudes the aperture 18 and into the interior of the main portion 13.

A short actuating lug 23 is provided on the cylindrical body 20, and this lug may be moved by depressing a hinged switch 24, shown in Figure 1, which is presented on the bracing plate 3. When the switch 24 is depressed, the lug 23 is driven away from the main portion 13, against the action of the spring 21, thus withdrawing the rod 19 from the interior of the main portion 13.

At the opposing end of the main portion 13, a pivoting arm 26 is provided, which pivots around a pivot point 27 which is located a short distance outside the other of the shorter external walls 15 of the main portion 13. A slot 28 is provided through the external wall 15, running parallel with the base 14 of the main portion 13, and being located about half-way up the external wall 15. The majority of the pivoting arm 26 is located outside the main portion 13, but a protruding nose 29 thereof may pass through the slot and protrude into the interior of the main portion 13. The pivoting arm 26 is substantially L-shaped, with the protruding nose 29 being formed at the extremity of one branch of the L. The pivot point 27 is located part-way along this branch of the L, with the other branch of the L extending outwardly, generally parallel with the base 14 of the main portion 13.

A connecting rod 25 passes through the two opposed shorter external walls 15 of the main portion 13, and also through one of the shaping blocks 16, thus extending along the whole length of the main portion 13 and protruding from both ends thereof. One end of the connecting rod 25 is attached to a pushing member 28 which is attached to the cylindrical body 20. The other end of the connecting rod 25 pushes against the arm of the pivoting lever 26 which does not carry the protruding nose 29. A biasing spring 30 is provided to bias the pivoting arm 26 into a position in which the protruding nose thereof does not extend into the interior of the main portion 13. However, when the rod 19 carried by the cylindrical body 20 protrudes into the interior of the main portion 13, the arrangement is such that the connecting rod 25 pushes against the branch of the pivoting arm 26 that does not carry the protruding nose 29, and forces the pivoting arm 26 into a position in which the protruding nose 29 does extend into the interior of the main portion 13.

When the lug 23 is forced away from the main portion 13, thus withdrawing the rod 19 from the interior of the main portion 13, the connecting rod 25 is retracted by a short distance away from the pivoting arm 26, allowing the biasing spring 30 to act on the pivoting arm 26 and thus withdraw the protruding nose 29 from the interior of the main portion 13.

In summary, the arrangement is such that, in one configuration, the rod 19 and the protruding nose 29 both extend into the interior of the main portion 13, at opposing ends thereof. When the lug 23 is pushed away from the main portion 13, however, both the rod and the protruding nose 29 are withdrawn from the interior of the main portion 13.

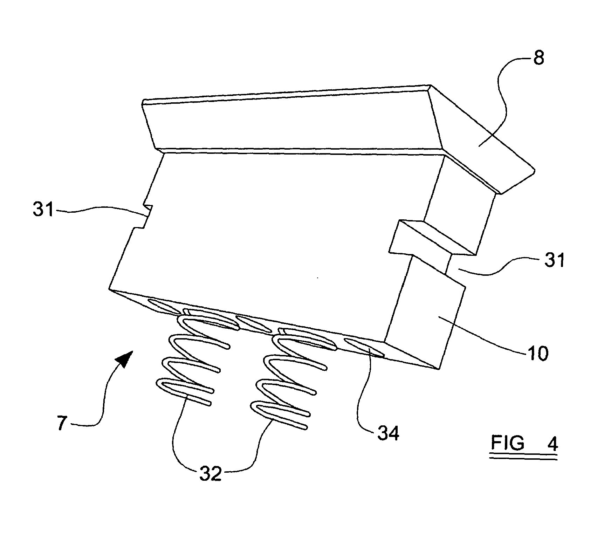

Turning to Figure 4, the retaining element 6 is shown, removed from the remainder of the components described above. The main body 10 has a pair of slots 31 formed in respective ends thereof, around half-way up the height of the main body 10. In addition, a pair of springs 32 extend away from the underside of the main body 10.

Returning to the mechanism described in Figure 3, it can be seen that the main body 10 may be received in the interior of the main portion 13, and can be pressed downwardly so that the rod 19 and the protruding nose 29 are received in the slots 31, thus holding the retaining element 7 within the main portion 13. In this state, the retaining element 6 is in the stowed configuration, as shown in Figure 1. If the switch 24 is depressed, however, the rod 19 and nose 29 will be withdrawn from the interior of the main portion 13, and the springs 32 which are attached to the underside of the main body 10 will cause the main body 10 to rise upwardly out of the open top of the main portion 13, as the springs 32 will press against the base 14 of the main portion 13. The retaining arrangement 1 will then be in the retaining configuration, as shown in Figure 2.

The distance by which the retaining element 6 rises up may be determined by providing bolts (not shown) which are inserted through holes 33 which are formed in the base 14 of the main portion 13, and are then fixed, nose first, into appropriate apertures 34 in the underside of the main body 10. The rear ends of the bolts have heads which are too wide to fit through the holes 33 in the base 14. The bolts are attached to the apertures 34 on the underside of the main body 10 so that a significant length of the body of each bolt protrudes from the main body 10 before terminating in the respective head.

In the stowed configuration, therefore, a length of each bolt will protrude from the underside of the base 14 of the main portion 13. When the retaining element 6 moves to the retaining configuration thereof, the retaining element 7 is driven upwardly by the springs 32 until the heads of the bolts come to rest against the underside of the base 14 of the main portion 13. At this point, the retaining element 6 will not be able to rise upwardly any further, and indeed further upward movement of the retaining element 6 will be strongly resisted.

To return the retaining element 6 from the retaining configuration to the stowed configuration, it is simply necessary to apply a downward force to the top surface 7 thereof. The retaining element 6 will then be pushed downwardly against the springs 32 until the rod 19 and protruding nose 29 align with the slots 31 that are formed in the main body 10. Under the action of the spring 21 that drives the cylindrical body 20 as described above, the rod 19 and protruding nose 29 will advance into the slots 31, thus holding the main body 10 in place. The downward force applied to the retaining element 6 can then be removed, and the retaining element 6 will stay in the stowed configuration, as shown in Figure 1. It will thus be appreciated that the retaining element 6 can be easily and swiftly moved between the stowed configuration and the retaining configuration.

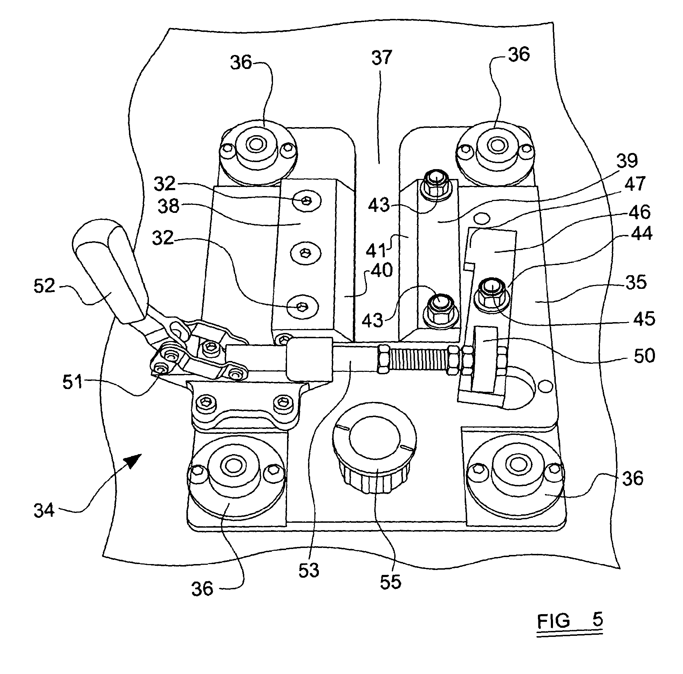

Turning now to Figure 5, a seat attachment 34 is shown. A seat (not shown) is to be mounted on the seat attachment 34, with the seat attachment 34 providing a base upon which the seat rests. A skilled person will readily appreciate how a seat may be attached to the seat attachment 34.

The seat attachment 34 comprises a base plate 35, which is substantially planar and generally rectangular in shape. Castors (not shown) are provided on the underside of the base plate 35 near the four corners thereof, and castor mounters 36 are provided on the top surface of the base plate 35 to hold the castors in place. The castors allow the base plate 35 to be moved around easily on a flat surface without causing damage to the surface.

A receiving slot 37 is formed in the base plate 35. The receiving slot 37 extends from the middle of one of the shorter ends of the rectangular base plate 35, around three-fifths of the way towards the other of the short ends. The base plate 35 is therefore generally U-shaped.

Provided on the top surface of the base plate 35, on either side of the receiving slot 37, are a pair of holding elements 38, 39. Each of the holding elements 38, 39 takes the form of a flattened, generally oblong block with a bottom surface thereof being placed against the top surface of the main plate 35, with one edge of the bottom surface being located at or near an edge of the receiving slot 37. A holding face 40, 41 of each of the holding elements 38, 39, which faces the receiving slot 37, slopes away from the receiving slot 37 as it extends from the bottom surface of the holding element 38, 39 to the top surface thereof. The angle of inclination of the holding faces 40, 41 substantially matches the angle of inclination of the retaining surfaces 9 of the retaining element 7.

A first one 38 of the holding elements is secured firmly to the main plate 35 by a series of screws 32. A second one 39 of the holding elements is also attached to the base plate 35 by a pair of screws 43, although the second holding element 39 is allowed some "play" in that the second holding element 39 is able to advance a short distance towards the centre of the receiving slot 37. This is achieved by providing elongated apertures (not shown) passing through the second holding element 39, through which the screws 43 pass, and the length of these apertures allows the second holding element 39 to move a short distance with respect to the screws 43 and the base plate 35.

A clamping arm 44 is also mounted on the base plate 35. The clamping arm 44 is elongate and generally planar, being arranged to be parallel with the base plate, and is arranged to pivot around a pivot point 45, which is provided a short distance behind the second holding element 39. The pivot point 45 is provided roughly in the centre of the clamping arm 44. On one side of the pivot point 45, a first branch 46 of the arm 44 extends behind the second holding element 39, having a short pushing protrusion 47 extending therefrom in the direction of the second holding block 39. A second branch 50 of the clamping arm 44 is attached at its distal end to a locking arrangement 51. The locking arrangement 51 comprises a handle 52 which is linked to an actuating arm 53, which in turn is fixed to the second branch 50 of the locking arm 44. When the handle 52 is in an unlocked position, the first branch 46 of the arm 44 does not contact the rear surface of the second holding block 39. When the handle is moved, however, to a locked position, the actuation arm 53 is driven to cause the clamping arm 44 to pivot around the pivot arm 45, so that the first branch 46 of the clamping arm 44 presses against the rear surface of the second holding block 39, driving the second holding block 39 towards the centre of the receiving slot 37. The handle 52 allows the locking arrangement 51 to be toggled between the locked and unlocked positions.

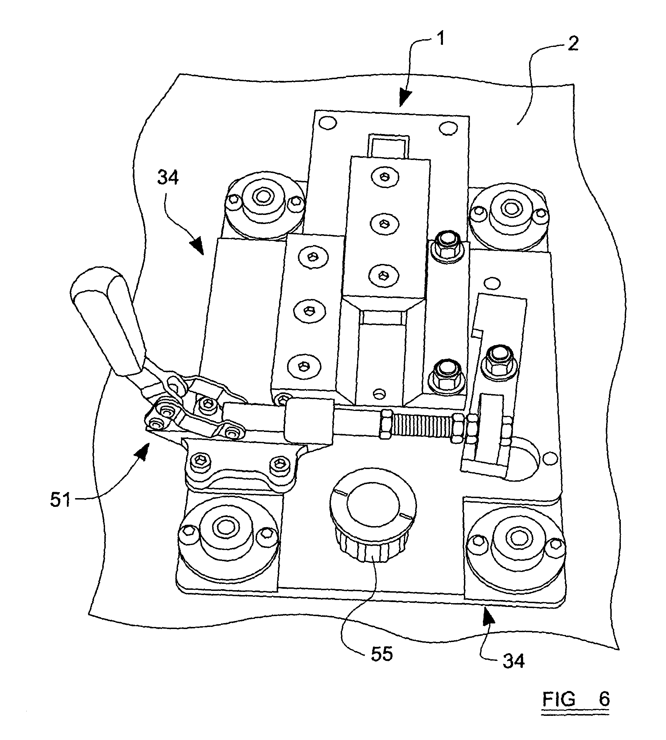

Turning to Figure 6, a method of fixing the seat attachment 34 to a surface will be described. The surface 2 has a retaining arrangement 1 as described above provided therein. Firstly, the retaining element 6 of the retaining arrangement 1 is placed in the retaining configuration thereof. The seat attachment 34 is then arranged so that the receiving slot 37 thereof is aligned with the retaining element 6. The seat attachment 34 is then pushed towards the retaining arrangement 1, so that the retaining arrangement 6 is received in the receiving slot 37and the holding faces 40, 41 of the holding elements 38, 39 lie close to the retaining surfaces 9 of the retaining element 6.

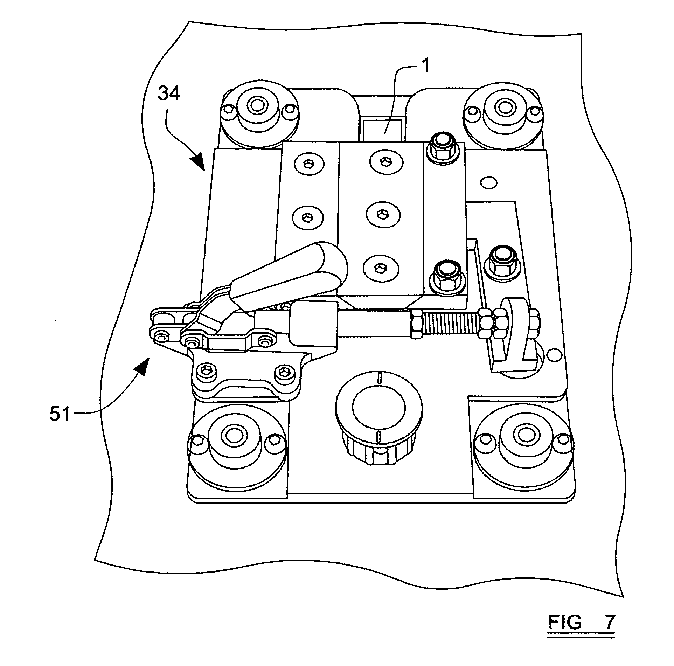

With reference to Figure 7, once the retaining element 6 has been fully received in the receiving slot 37, the handle 52 of the locking arrangement 51 is then moved to the locked position. The clamping arm 44 pivots around the pivot point 45, and pushes the second holding block 39 towards the retaining element 6. This causes the holding faces 40, 41 of the holding blocks 38, 39 to be driven firmly against the retaining surfaces 9 of the retaining element 6, thereby driving the base plate 35 downwardly against the surface 2, and fixing the seat attachment 34 firmly in place with respect to the retaining arrangement 1. A seat mounted on the seat attachment 34 would then be fixed in place on the surface 2.

To release the seat attachment 34, the handle 52 of the locking arrangement 1 is moved to the unlocked position, so that the clamping arm 44 pivots to stop exerting a force on the rear surface of the second holding block 39. The seat attachment 34 may then be slid away from the retaining element 6.

In preferred embodiments of the invention, a locating hole 54 is provided in the surface 2. As shown in Figures 1 and 2, this hole may be provided in the surface 2 adjacent the bracing plate 3, or indeed the bracing plate 3 may cover the locating hole 54 and have a corresponding aperture formed therethrough, aligned with the locating hole 54.

In these embodiments, a locating knob 55 is provided on the seat attachment 34. The locating knob 55 comprises a pin (not shown) projecting downwardly therefrom and passing through a hole (not shown) in the base plate 35. When the retaining element 6 has been fully inserted into the receiving slot 37, the pin of the locating knob 55 aligns with the locating hole and may be inserted therein, thus registering the seat attachment firmly with respect to the surface 2.

In embodiments of the invention, a movable cover (not shown) may be provided for the locating hole 54, with the cover covering the locating hole 54 when the retaining element 6 is in the stowed position but moving to uncover the locating hole 54 when the retaining element 6 is in the retaining position. This may be achieved, for example, by providing a pivoting arm, one end of which is attached to an underside of the main body 10 of the retaining element 6 and the other end of which carries the cover. In the stowed position, the cover is pressed against the underside of the surface 2 and blocks the locating hole 54, but when the retaining element 6 rises upwardly to move into the retaining position, the pivoting arm pivots so that the cover moves downwardly away from the locating hole 54 and thus allows the pin of the locating knob 55 to enter the locating hole 54.

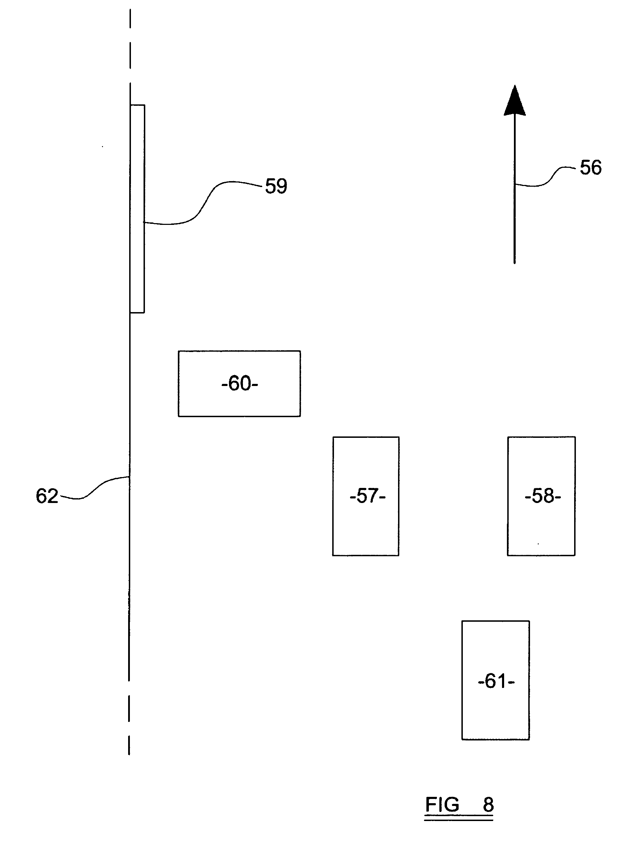

With reference to Figure 8, use of the present invention in a bus or coach will be described. The normal forward direction of travel of the bus or coach is indicated by an arrow 56.

First and second retaining arrangements 57, 58, as described above, are arranged on the floor of the bus or coach, in the vicinity of the front door 59 thereof. The first and second retaining arrangements 51 are arranged so that seats, mounted on seat attachments 34 and attached to the first and second retaining arrangements 57, 58 in the manner described above, will be in an appropriate position to form a normal front row of seats, facing towards the front of the bus or coach.

Third and fourth retaining arrangements 60, 61 are also provided. The third retaining arrangement 60 is rotated through 90° with respect to the first retaining arrangement 57, and is provided closer to the external wall 62 of the bus or coach. The third retaining arrangement 60 is also located forwardly of the first retaining arrangement 57.

The fourth retaining arrangement 61 is located behind the second retaining arrangement 58, and also located closer to the external wall 62 of the bus or coach than the second retaining arrangement 58.

In order to rearrange the seating on the bus or coach to accommodate a wheelchair user, one seat is detached from the first retaining arrangement 57, the squab thereof is removed or folded upwardly, and the seat is then attached to the third retaining arrangement 60, with the back-rest of the seat lying close to the external wall 62 of the bus or coach.

A second seat is detached from the second retaining arrangement 58, the squab thereof is removed, and the seat is attached to the fourth retaining arrangement 61. A wheelchair can then be backed up until it comes to rest against the back-rest of the second seat, so that the wheelchair user may rest his or her back against this back-rest. The wheelchair is then secured to the floor of the bus or coach, and/or to the second seat itself, and the skilled person will readily appreciate how this may be achieved.

The movement of the first and second seat as described above creates a space for the wheelchair to be accommodated, and also positions the second seat appropriately so that the back-rest thereof may be used to retain the wheelchair in an appropriate place. It will be appreciated that providing retaining arrangements 57, 58, 60, 61 as described above presents a simple and effective solution allowing re-arrangement of seats on a bus or coach, without the need to provide elongate tracks or the like to allow movement of the seats.

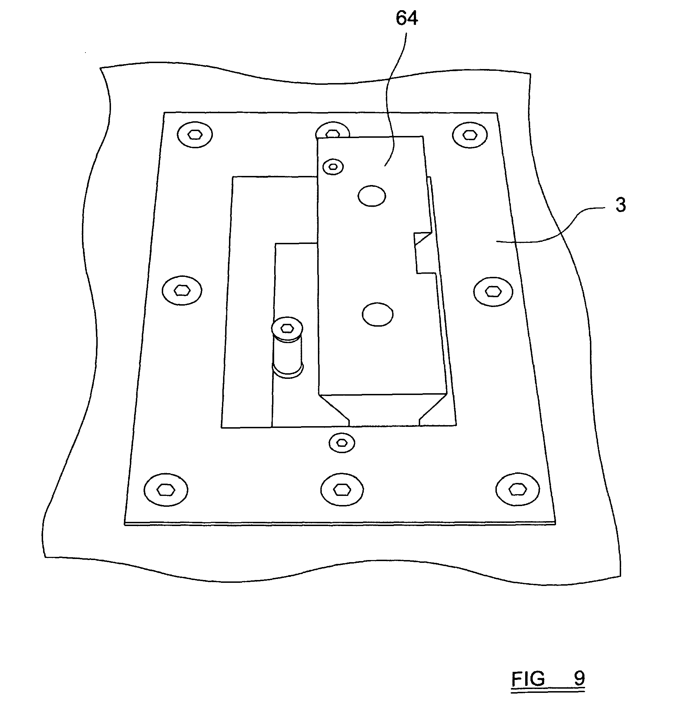

An alternative retaining arrangement 63 will now be described, with reference to figures 9 to 15.

With reference firstly to figure 9, an alternative retaining arrangement 63 is shown. In common with the retaining arrangement 1 described above, the alternative retaining arrangement 63 is accommodated in a hole which is cut out of a surface 2. A bracing plate 3 is provided, which surrounds the hole and lies substantially flush with the surface 2.

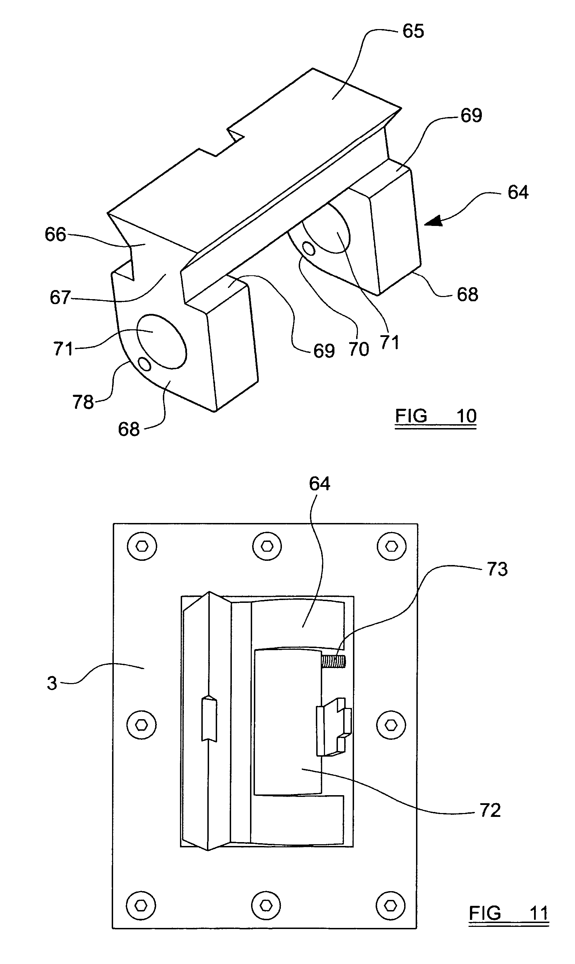

A rotating retaining element 64 is provided, and this component is shown in more detail in figure 10. In common with the retaining element 6 described above, the rotating retaining element 64 has a generally planar top surface 65, which forms one surface of a top member 66 which has a generally trapezoid cross-section. A main body 67 is provided, which is generally oblong in shape, one face thereof being approximately the same size and shape as the bottom surface of the top member 66. The top member 66 and the main body 67 are formed integrally with one another, or secured firmly to one another.

Depending from a lower surface of the main body 67 are a pair of support members 68, one being provided at each end of the main body 67. Each of the support members 68 is of substantially square cross-section, the underside of the main body 67 being joined to one side surface 69 thereof, so that the central axis of the square cross-section is substantially parallel with the longitudinal axis of the main body 67. One corner 70 of the square cross-section is, however, rounded off.

A generally circular hole 71 passes through the centre of each of the support members 68, with the holes 71 being aligned with one another.

A support bar 72 spans the length of the aperture in the surface, and is supported at either end thereof by suitable apertures provided in the side walls of a "pocket" (not shown) which is provided beneath the surface. The pocket is formed from four sturdy side walls and houses the components of the alternative retaining arrangement 63. The support bar passes through the holes 71 in the support member 68 of the rotating retaining member 64, so that the rotating retaining element 64 is rotationally mounted with respect to the surface 2. The support bar 72 is offset from the centre of the aperture formed in the surface 2, being closer to one side thereof than to the other.

It will be understood that the rotating retaining element 64 may move between a retaining configuration and a stowed configuration by rotation around the support bar 72. In the retaining configuration, the rotating retaining element 64 is oriented so that the top member protrudes directly upwardly out of the aperture provided in the surface, so that a wheelchair or other object may be secured to the surface, as discussed above. In the stowed position, the rotating retaining element 64 is rotated though approximately 90°, so that the top member 66 thereof protrudes away from the support bar 72 in a direction which is substantially parallel with the surface, and in this configuration none of the rotating retaining elements 64 protrudes above the level of the surface 2. This configuration is shown in figure 11.

It will be understood that the rounded corner 70 of the support members 68 allows this rotation to take place, but that the flat surfaces adjacent the rounded corner 70 help to register the rotating retaining element 64 in the stowed and retaining configurations, as they will abut against an inner wall of the product.

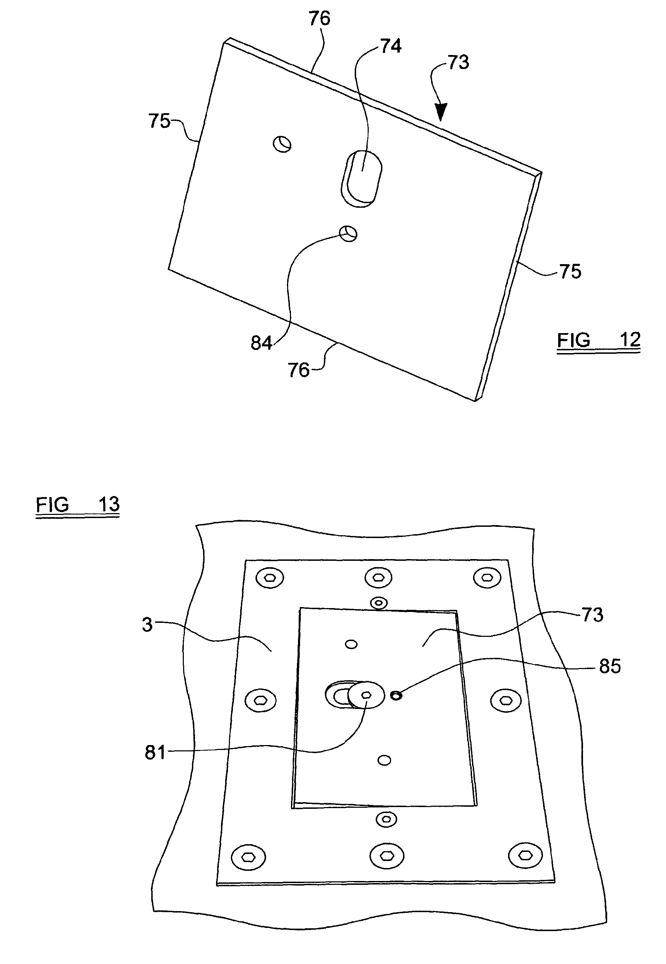

Referring to figure 12, a cover 73 is provided to cover the rotating retaining element 64 when it is in the stowed position. The cover 73 comprises a generally rectangular sheet of a rigid material, which is preferably metal. An elongate locking slot 74 is provided through the cover 73, disposed generally midway between two shorter edges 75 thereof, and parallel to these edges 75. The locking slot 74 is closer to one of the longer edges 76 of the cover 73 than to the other. Level with an underside of the cover 73, an inward-facing lip 82 is formed around the periphery of the locking slot 74.

The cover is hingedly attached to a retaining strip (not shown), which comprises an elongate, rectangular plate, preferably made of metal. One end of the retaining strip is attached by hingesto the centre of the longer edge 76 of the cover that is furthest away from the locking slot 74, and the other end of the retaining strip is attached to a retaining block (not shown). A sturdy loop or guide is provided on an internal side wall of the pocket, and the retaining strip passes through this loop or guide. The retaining block is, however, too wide to pass through the retaining loop or guide. The retaining strip is generally vertically oriented, with the cover 73 being hinged to the top end thereof, and the retaining block being attached to the bottom end thereof.

When the rotating retaining element 64 is in the retaining configuration, the cover 73 lies within the pocket, generally flush with one of the side walls thereof, and does not protrude above the level of the surface 2. However, when the rotating retaining element 64 has been moved to the stowed position, the cover 73 may be lifted upwardly above the level of the surface 2. This upward motion will be halted by the retaining block reaching the retaining loop or guide, through which it is too wide to pass. The cover 73 may then be rotated until it lies over and covers the rotating retaining element 64, as shown in figure 13.

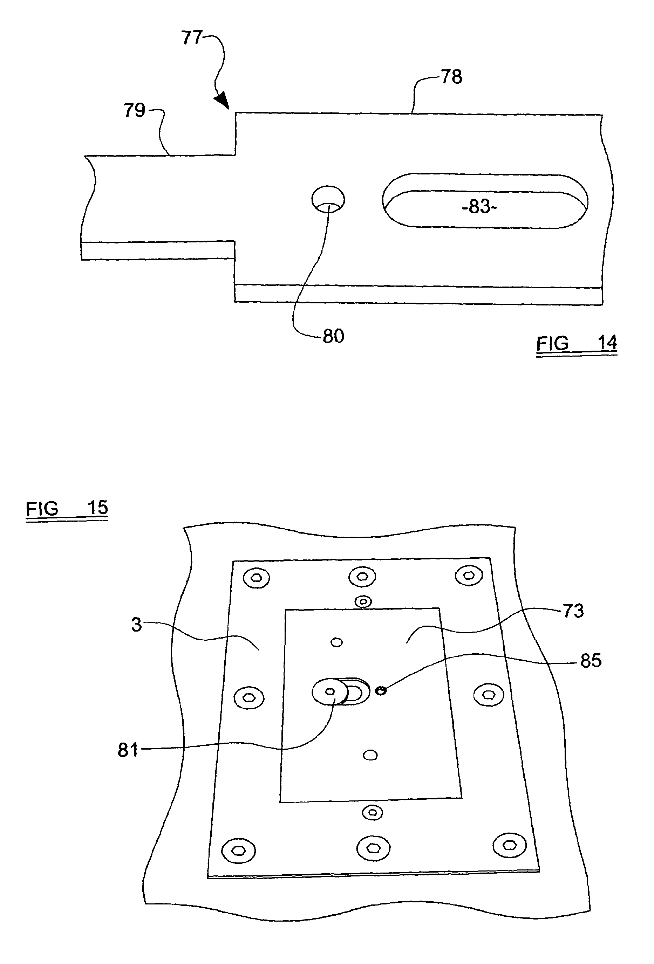

With reference to figure 14, a locking piece 77 is shown. The locking piece 77 has a generally rectangular main portion 78, with a locking protrusion 79 protruding from one of the shorter edges thereof. A holding aperture 80 is provided through the main body 78.

The locking piece 77 is secured to the underside of the cover 73 by a flat-headed bolt 81 which passes through the locking slot 74 of the cover 73 and into the holding aperture 80 of the locking piece 77. The flat-headed bolt 81 may slide along the locking slot 74 but, due to the inward-facing lip 82 of the locking slot 74, may not pass therethrough. The arrangement is such that, when the flat-headed bolt 81 is pushed to the end of the locking slot 74 that is closest to the centre of the cover 73, the locking protrusion 79 does not project beyond the perimeter of the cover 73. If the flat-headed bolt 81 is pushed to the other end of the locking slot 74, however, the locking protrusion 79 projects outwardly past the edge of the cover 73.

In the embodiment shown in the figures, a guide slot 83 is formed in the locking piece 77 and a guide aperture 84 is formed in the cover 73. A securing bolt 85 passes through the guide aperture 84 and is received in the guide slot 83, to ensure that there is minimal "play" between the cover 73 and the locking piece 77.

When the cover 73 has been placed over the rotating retaining element 64, the flat-headed bolt can be pushed towards the end of the locking slot 74 that is closest to the edge of the cover 73, thus causing the locking projection 79 to project into a cooperating locking hole (not shown) provided in one of the side walls of the pocket. The cover 73 is therefore held firmly in place, as shown in figure 15.

To reverse the process, and place the alternative arrangement 63 into the retaining configuration thereof, the flat-headed bolt 71 is slid to the end of the locking slot 74 that is closest to the centre of the cover 73, and the cover 73 may then be lifted up so that the rotating retaining element 64 is exposed. The cover 73 may then be pushed into the pocket so that it lies substantially flush with one of the internal side walls of the pocket. The cover 73 may come to rest with its upper edge level with, or slightly below, the level of the surface 2, when a lower surface of the cover 73 comes into contact with the retaining loop or guide.

Instead of the inclined retaining surfaces described above, downward-facing retaining surfaces that are substantially parallel with the surface 2 may be provided. In this case the retaining element may have a substantially T-shaped cross-section. In these embodiments, the holding elements of the seat attachment may be movable upwardly away from the base plate, so as to abut firmly against the downward-facing retaining surfaces.

In further embodiments, each side of the retaining element may have a slot formed therealong with opposing upper and lower surfaces, so that, in cross-section, the retaining element resembles two C-shapes, back to back. In these embodiments, the holding elements may each have an elongate protruding rib that fits into the slot on one side of the retaining element. Optionally, each holding element may be movable inwardly, towards the centre of the receiving slot, and/or upwardly away from the base plate, to lock the seat attachment in place.

It is important, however, that the retaining element provides at least one elongate retaining slot, which is disposed substantially parallel to the surface. A part of the or each retaining slot is formed by a retaining surface which faces, when the retaining element is in the retaining position, in a direction having at least a component that extends towards the plane of the surface in the vicinity of the retaining element. In other words, while the surface may be deflected or distorted away from the retaining arrangement, the retaining surface must face in a direction which has at least a component that points downwardly towards the surface immediately around the retaining arrangement.

In the embodiments discussed above, the retaining element has a fixed shape, with a movable holding element being provided as part of the seat attachment. However, it is also envisaged that one or more parts of the retaining element itself may be movable. In one example, the retaining element may have a locking arrangement in which the two sides thereof can lie adjacent one another, or be driven apart from one another. A seat attachment with a pair of holding elements that are fixed in place may therefore be provided, and once the retaining element has been inserted into the receiving slot, the two sides of the retaining element may be driven apart so as to abut firmly against the holding surfaces of the holding elements, thus fixing the seat attachment in place with respect to the retaining arrangement.

In this specification terms such as "top", "bottom", "up" and "down" are used, but it is to be understood that these are used in the context of an arrangement which is used on a horizontal floor. Embodiments of the present invention may be used on a surface having any orientation, and terms such as these should be interpreted accordingly.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A retaining arrangement for securing an object to a surface, comprising a retaining element which is moveable between a stowed position, in which the retaining element is substantially level with, or below, the level of the surface, and a retaining position, in which the retaining element protrudes from the surface and presents at least one elongate retaining slot above the surface which is substantially parallel with the surface, into which a part of an object to be retained may be inserted, the retaining slot being at least partially formed by a retaining surface of the retaining element, the retaining surface facing, when the retaining element is in the retaining position, in a direction having at least a component that extends towards the plane of the surface in the vicinity of the retaining element.

2. A retaining arrangement according to claim 1, wherein the retaining surface comprises an upper surface of the retaining slot, and the retaining slot further comprises a lower surface which at least partially opposes the upper surface.

3. A retaining arrangement according to claim 2, wherein the lower surface comprises the surface to which the object is to be secured, or another component which is substantially coplanar therewith.

4. A retaining element according to claim 2, wherein the lower surface comprises a part of the retaining element.

5. A retaining arrangement according to any one of the preceding claim, wherein the retaining element is biased into the retaining position, and can be held in the stowed position by an engagement arrangement.

6. A retaining arrangement according to any preceding claim, wherein the retaining arrangement may be provided in an aperture in the surface, and in the stowed position the retaining arrangement substantially fills the aperture so that a generally planar surface is presented which is substantially level with the surface.

7. A retaining arrangement according to any preceding claim, wherein a part of the retaining element may be moved from an unlocked position to a locked position, to engage an object which is received in the retaining slot.

8. A retaining arrangement according to any preceding claim, wherein the retaining element may move between the stowed configuration and the retaining configuration whilst remaining substantially in the same rotational orientation.

9. A retaining arrangement according to any one of claims 1 to 7, wherein the retaining arrangement may rotate between the stowed configuration and the retaining configuration.

10. A carriage for mounting an object on a surface, the carriage comprising a base plate that may rest on the surface, the base plate having a receiving aperture formed therein and having a holding element located at or near an edge of the receiving aperture, the holding element being moveable with respect to the base plate so that, when a retaining element is received in the receiving aperture, the retaining element having at least one retaining surface which faces in a direction having at least a component that extends towards the plane of the surface in the vicinity of the retaining member, the holding element may move so as to abut the retaining surface, thus holding the base plate in position with respect to the retaining element.

11. A carriage according to claims 10, adapted to have a seat mounted thereon.

12. A method of attaching an object to a surface, comprising the steps of:
providing a retaining arrangement according to any one of claims 1 to 9 in the surface;
mounting the object to a carriage according to claim 10 or 11;
arranging the carriage so that the retaining element is received in the receiving slot thereof; and
moving the holding element to fix the carriage in place with respect to the retaining element.

13. A method of attaching an object to a surface, comprising the steps of:
providing a retaining arrangement according to claim 7 in the surface;
mounting the object to a carriage according to claim 10;
arranging the carriage so that the retaining element is received in the receiving slot thereof; and
moving the part of the retaining element to fix the carriage in place with respect to the retaining element.

14. A vehicle having one or more retaining elements according to any one of claims 1 to 9 provided in a floor surface thereof for attaching seats removably to the vehicle floor.

15. A vehicle according to claim 14, wherein a plurality of retaining elements are provided for a single seat, to allow the seat to be moved to any one of a variety of positions within the vehicle.
